(19) Europäisches Patentamt / European Patent Office / Office européen des brevets

(11) **EP 3 091 724 A1**

(12) **EUROPEAN PATENT APPLICATION**

(43) Date of publication:
**09.11.2016 Bulletin 2016/45**

(51) Int Cl.:
**H04M 11/06** (2006.01)      **H04M 3/30** (2006.01)

(21) Application number: **15305682.5**

(22) Date of filing: **05.05.2015**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**MA**<br><br>(71) Applicant: **ALCATEL LUCENT**<br>**92100 Boulogne-Billancourt (FR)**<br><br>(72) Inventors:<br>• **Dupuis, Nicolas**<br>**6041 Gosselies (BE)** | • **Drooghaag, Benoît**<br>**6041 Gosselies (BE)**<br><br>(74) Representative: **ALU Antw Patent Attorneys**<br>**Intellectual Property and Standards**<br>**Copernicuslaan 50**<br>**2018 Antwerp (BE)**<br><br>Remarks:<br>Amended claims in accordance with Rule 137(2) EPC. |

(54) **METHOD AND DEVICE FOR DETERMINING THE STABILITY OF A DIGITAL SUBSCRIBER LINE**

(57)     Embodiments relate to a method for determining the stability of a Digital Subscriber Line (5), executed by a control device (2), comprising:
- obtaining (S1) at least one performance indicator (MTBE) representative of an issue rate on said Digital Subscriber Line (5), and
- determining (S2) the stability of said Digital Subscriber Line (5) by comparing said performance indicator with at least one threshold ($\Theta_s$, $\Theta_u$),
- wherein said at least one threshold ($\Theta_s$, $\Theta_u$) is determined by:
- obtaining (T1) data representative of the actual or attainable bitrates of a group of Digital Subscriber Lines (5), said group including a plurality of Digital Subscriber Lines (5),
- determining (T2) at least one reference bitrate (R1, R2) in function of said actual or attainable bitrates, and
- determining (T3, T4) said at least one threshold ($\Theta_s$, $\Theta_u$) in function of said reference bitrate (R1, R2).

FIG. 4

EP 3 091 724 A1

**Description**

FIELD OF THE INVENTION

The present invention relates to the field of telecommunications. In particular, the present invention relates to a method and a device for determining the stability of a Digital Subscriber Line.

BACKGROUND

Dynamic Line Management (DLM) is a technique which includes monitoring the line performances and taking actions in order to provide better quality of service. Principle of the known DLM is based on a dynamic assessment and monitoring of the stability of a line in order to take the most suitable action on the PHY parameters in order to guarantee the DSL stability of the line and to provide the line with the highest bitrate performances under this stable condition. By contrast, when a line gets unstable, in order to restore the PHY stability, INP/latency and/or noise margin can be increased. These actions have direct effects on the speed (bitrate) and/or reactivity (latency) of a line. It is therefore important to suitably assess the stability of a line to really improved its quality of service and to avoid any decrease in the quality of experience of the end user (e.g. if a fairly stable line has been classified as unstable, although the end user does not feel any practical impacts on its quality of experience, the DLM will take actions leading to reducing the bitrate and/or lowering the reactivity of the line. At the end, consequences are the decrease of the offered experience. Obviously, in this case, end-user satisfaction is not improved).

To assess the Quality of Service (QoS) of a line, for example to establish if a line is stable or not, metrics and thresholds have been defined from empirical rules. These metrics are the Mean Time Between Errors (MTBE) and the Mean Time Between Resynchronizations (MTBR), capturing respectively the mean time that a line has to wait before its PHY service is being degraded by corrupted symbols, i.e. by PHY symbols containing impacting errors, for example because of impulse noise, and the mean time before the modems resynchronize spontaneously because of weak quality of the link. The MTBE and MTBR are compared with thresholds for determining the stability of the line.

A difficulty resides in the definition of the MTBE thresholds, which should reflect ideally the user impact. Indeed, measurements shows that, with similar error rate (similar MTBE), two lines driven at two different speed (DSL bitrate) are not similarly impacted. In other words, the speed reduction perceived by end-users because of the presence of regular errors (high BER or low MTBE) is, among others, dependent on the bitrate proposed at the PHY-layer (the DSL actual bitrate). It has been proposed to determine these thresholds, taking into account for instance some operator's customer care information (like the presence/amount of user's complains). However, these solutions suffer from bias, as not each end-user complain for the same symptoms, as each impact can be perceived differently and as each customer have their tolerance threshold before complaining to operator's helpdesk.

SUMMARY

It is thus an object of embodiments of the present invention to propose methods and devices for determining the stability of a Digital Subscriber Line, which do not show the inherent shortcomings of the prior art.

Accordingly, embodiments relate to a method for estimating the stability of a Digital Subscriber Line, executed by a control device, comprising:

- obtaining at least one performance indicator representative of an issue rate on said Digital Subscriber Line, and
- determining the stability of said Digital Subscriber Line by comparing said performance indicator with at least one threshold,
- wherein said at least one threshold is determined by:
- obtaining data representative of the actual or attainable bitrates of a group of Digital Subscriber Lines, said group including a plurality of Digital Subscriber Lines,
- determining at least one reference bitrate in function of said actual or attainable bitrates, and
- determining said at least one threshold in function of said reference bitrate.

Correspondingly, embodiments relate to a control device for estimating the stability of a Digital Subscriber Line, comprising:

- means for obtaining at least one performance indicator representative of an issue rate on said Digital Subscriber Line, and
- means determining the stability of said Digital Subscriber Line by comparing said performance indicator with at least one threshold,

- wherein said control device comprises means for determining said at least one threshold, comprising:
- means for obtaining data representative of the actual or attainable bitrates of a group of Digital Subscriber Lines, said group including a plurality of Digital Subscriber Lines,
- means for determining at least one reference bitrate in function of said actual or attainable bitrates, and
- means for determining said at least one threshold in function of said reference bitrate.

The performance indicator may be a Mean Time Between Error, determined in function of at least one of an amount of Code Violation, of Errored Seconds and of Severly Errored Seconds.

The at least one reference bitrate may comprise a first reference bitrate representative of a maximum bitrate associated with most of the Digital Subscriber Lines of the group, and a second reference bitrate representative of a minimum bitrate associated with most of the Digital Subscriber Lines of the group.

In some embodiments, said first reference bitrate is the X-percentile of said actual or attainable bitrates, with $X \geq 50\%$, and/or said second reference bitrate is the Y-percentile of said actual or attainable bitrates, with $Y \leq 50\%$.

The at least one threshold may comprise a first threshold proportional to said first reference bitrate and a second threshold proportional to said second reference bitrate. Alternatively, the at least one threshold may comprise a first threshold determined as the maximum of a threshold proportional to said first reference bitrate and a first predetermined value, and a second threshold determined as the maximum of a threshold proportional to said second reference bitrate and a second predetermined value.

Determining the stability of said Digital Subscriber Line may comprise determining that the stability has one of a first value representative of a stable or good state, a second value representative of a risky or intermediate state, and a third value representative of an unstable or degraded state.

The method may comprise controlling said Digital Subscriber Line in function of the determined stability. For example, controlling said Digital Subscriber Line comprises increasing a noise margin and/or a latency of the Digital Subscriber Line in response to determining that the stability has said third value.

Embodiments also relate to a computer program comprising instructions for performing the method mentioned before when said instructions are executed by a computer.

BRIEF DESCRIPTION OF THE DRAWINGS

The above and other objects and features of the invention will become more apparent and the invention itself will be best understood by referring to the following description of embodiments taken in conjunction with the accompanying drawings wherein:

Figure 1 is a bloc diagram of a telecommunication network,
Figures 2 and 4 are flowcharts of a method for controlling Digital Subscriber Lines of the telecommunication network of Figure 1,
Figure 3 is a graph showing a relationship between TCP-IP throughput and MTBE, and
Figure 5 is a structural view of a control device of the telecommunication network of Figure 1.

DESCRIPTION OF EMBODIMENTS

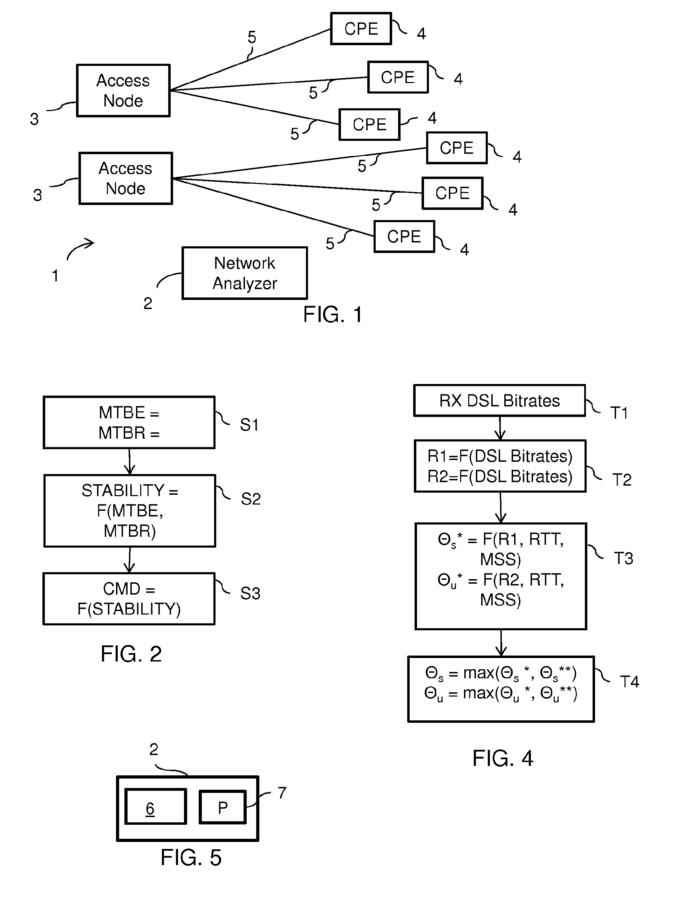

**Figure 1** is a partial view of telecommunication network 1. The telecommunication network 1 comprises a control device 2, a plurality of access nodes 3, a plurality of customer premises equipments 4 and a plurality of Digital Subscriber Lines 5 (DSL) connecting respective customer premises equipments 4 to one of the access nodes 3.

An access node 3 and a customer premises equipment 4 use a DSL technology for communication over a Digital Subscriber Line 5. For example, the access node 3 is or comprise a DSLAM and the customer premises equipments 4 is or comprise a user's DSL modem. A Digital Subscriber Line 5 comprises at least one pair of electrically conductive wires.

The control device 2 is capable of communicating with the access nodes 3 and/or the customer premises equipment 4. In particular, the control device 2 may obtain, from an access node 3 and/or a customer premises equipment 4, data related to the functioning of the Digital Subscriber Line 5. For example, an access node 3 and/or a customer premises equipment 4 regularly reports operational parameters to the control device 2 and/or sends such parameters in response to a request from the control device 2. The control device 2 may also sends commands to an access node 3 and/or a customer premises equipment 4 for configuring the functioning of the Digital Subscriber Line 5. For example, control device 2 may control the noise margin, latency, bitrate... of the Digital Subscriber Line 5.

The control device 2 executes a Dynamic Line Management (DLM) function on at least some of the Digital Subscriber Lines 5. This include assessing the stability of a Digital Subscriber Line 5 and taking actions directly on the access node 3 or the customer premise equipment 4 depending on the determined stability, as described in more details hereafter with reference to Figure 2. Assessing the stability of a Digital Subscriber Line 5 involves comparisons of some metrics with thresholds. The control device 2 determines these thresholds as described in more details hereafter with reference to Figure 4.

The control device 2 may be a network analyzer which, in addition to the Dynamic Line Management function mentioned before, executes other monitoring and/or troubleshooting tasks related to the access nodes 3, the customer premises equipments 4 and the Digital Subscriber Lines 5.

**Figure 2** is a flowchart of a part of a method for controlling a Digital Subscriber Line 5, executed by the control device 2 implementing a Dynamic Line Management functionality.

The control device 2 obtains performance indicators related to issues rate on the telecommunication line 5 (Step S1). In this embodiment, the performance indicators include:

- the Mean Time Between Errors (MTBE), representative of the mean time that a line has to wait before its PHY service is being degraded by corrupted symbols, i.e. by PHY symbols containing impacting errors, for example because of impulse noise, and
- the Mean Time Between Resynchronization (MTBR), related to the mean time before the modems resynchronize spontaneously because of weak quality of the link.

The MTBE and MTBR may be determined as follows:

$$ErrorEvents(T) = \omega_1 CV(T) + \omega_2 ES(T) + \omega_3 SES(T)$$

$$MTBE = \frac{showtime(T)}{ErrorEvents(T)}$$

$$MTBR = \frac{showtime(T)}{Resynchronization(T)}$$

where T is a time window during which the data, such as the amount of Code Violation (CV), the Errored Seconds (ES), the Severly Errored Seconds (SES), the amount of showtime or the amount of spontaneous resynchronizations are monitored. When a signal is corrupted, a Code Violation is reported. ES is the number of seconds during which one or more non-remedial errors have occurred. SES is the number of times when a given number of consecutive Errored Seconds has been measured. Notice also that these MTBE and MTBR can be split between the two Downstream and Upstream directions but can also be merged (for example by a union/sum/mean of the two metrics). The weights $\omega_1$, $\omega_2$ and $\omega_3$ may have predefined values depending on the application, for example with [w1 w2 w3]=[1 0 0] in the case of high speed Internet service or with [w1 w2 w3]=[0 1 18] in the case of IPTV. Other techniques may be used for determining the MTBE and/or the MTBR, such as weighting the number of errors in function of the usage of the Digital Subscriber Line 5.

The control device 2 may obtain the MTBE and/or MTBR by receiving measurement data (CV, ES, SES, number of resynchronizations, amount of showtime...) from the access node 3 and/or the customer premises equipment 4 and determining the MTBE and/or MTBR in function of the received data. Alternatively, the control device 2 may receive the MTBE and/or MTBR from the access node 3 and/or the customer premises equipment 4.

Then, the control device 2 determines the stability of the Digital Subscriber Line 5 in function of the MTBE and MTBR (Step S2). The stability may have for example three possible values: A stable or good state, a risky or intermediate state, and an unstable or degraded state. The stability may be determined by comparing the MTBE and MTBR with thresholds $\Theta_s$, $\Theta_u$, $\Gamma_s$, $\Gamma_u$ as follows:

$$STABLE: \quad MTBE > \Theta_s \ and \ MTBR > \Gamma_s$$

$$RISKY: \quad \Theta_s > MTBE > \Theta_u \ or \ \Gamma_s > MTBR > \Gamma_u$$

$$UNSTABLE: \quad MTBE < \Theta_u \ or \ MTBR < \Gamma_u$$

Then, the control device 2 controls the functioning of the Digital Subscriber Line 5 in function of the determined stability (Step S3). This may include for example reconfiguring the Digital Subscriber Line 5 to a higher bitrate when the determined stability is STABLE, and increasing the latency (thereby improving the impulse noise protection) and/or the noise margin of the Digital Subscriber Line 5 when the determined stability is RISKY or UNSTABLE. Increasing the latency and/or the noise margin improves the stability of the Digital Subscriber Line 5, but the bitrate and/or the reactivity of the line are reduced.

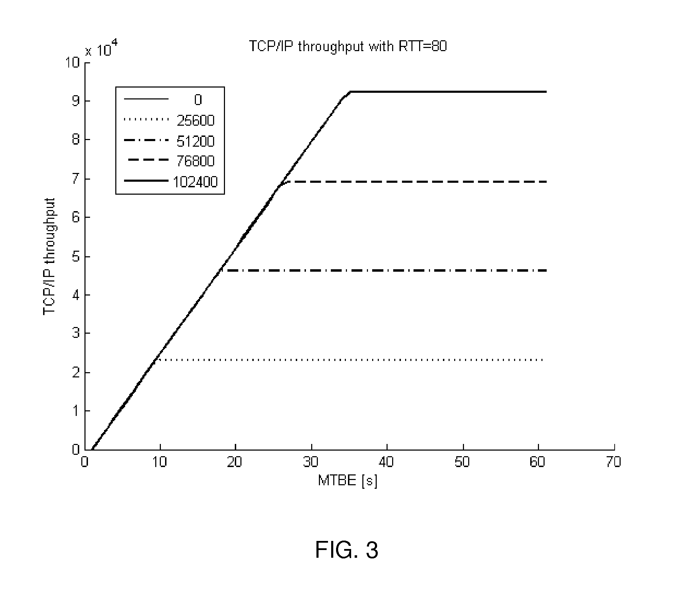

**Figure 3** is a graph illustrating the relationship between the TCP-IP throughput and the MTBE on a Digital Subscriber Line 5.

From TCP/IP theory, there exists a relationship between BER (bit error rate) and throughput, as corrupted packets need to be retransmitted, consuming therefore some bandwidth and even producing congestion. This relationship takes also into account the packet size defined through the TCP protocol, but also the Round-Trip-Time (RTT) of such packets (the time it takes to retransmit the packet from the server to the client). When the BER is expressed in terms of MTBE, the relationship is formalized as follows:

$$Rca = \frac{12 \cdot MSS \cdot MTBE}{RTT^2}$$

$$Rmax = \min(Roh\_efm, Rca)$$

wherein:

- Rca is the maximum throughput allowed by the collision avoidance (CA) mechanism of the TCP protocol,
- MSS is the maximum-segment-size of the TCP segment,
- Roh_efm is the EFM rate (Ethernet in the first mile) with overhead (This can be interpreted as the physical-layer rate at which the modems synchronize. Theoretically, this is the maximum rate at which the data can be transported under this synchronization conditions), and
- Rmax is the maximum TCP-IP throughput on the Digital Subscriber Line 5.

The graph of Figure 3 shows the values of Rmax in function of MTBE for RTT=195 ms and MSS=1460 bytes (a common value), for various DSL bitrates. This graph shows that the throughput depends on the DSL bitrate and the MTBE. For a given DSL bitrate R:

- If $MTBE \geq \frac{R \cdot RTT^2}{12 \cdot MSS}$, then the maximum throughput is limited by Rof_efm, and does not increase with a higher MTBE.

- If $MTBE < \frac{R \cdot RTT^2}{12 \cdot MSS}$, then the maximum throughput is limited by Rca and decreases with a lower MTBE.

**Figure 4** is a flowchart of another part of the method for controlling a Digital Subscriber Line 5, executed by the control device 2 for determining the thresholds $\Theta_s$ and $\Theta_u$ used at step S2 of Figure 2.

The control device 2 obtains the DSL bitrates for respective lines of a group of Digital Subscriber Lines 5 (Step T1). The DSL bitrates may be the attainable bitrates or the actual bitrates of the respective Digital Subscriber Lines 5 (respectively attainable net data rate and actual net data rate, in the context of G.INP). The group of Digital Subscriber Lines 5 may correspond for example to a marketing package.

Then, the control device 2 determines reference bitrates R1 and R2 in function of the obtained DSL bitrates (Step T2).

The reference bitrate R1 is representative of a maximum bitrate associated with most of the Digital Subscriber Lines 5 of the group. For example, reference bitrate R1 is the X-percentile of the DSL bitrates, with X ≥ 50%, meaning that X% of the Digital Subscriber Lines 5 have a DSL bitrate lower than R1.

The reference bitrate R2 is representative of a minimum bitrate associated with most of the Digital Subscriber Lines 5 of the group. For example, reference bitrate R2 is the Y-percentile of the DSL bitrates, with Y ≤ 50%, meaning that only Y% of the Digital Subscriber Lines 5 have a DSL bitrate lower than R2.

The determination of the reference bitrates R1 and R2 may be based on other statistics, such as means, median, standard distribution...

Then, the control device 2 determines thresholds $\Theta_s^*$ and $\Theta_u^*$ in function of the reference bitrates R1 and R2 (Step T3). The thresholds $\Theta_s^*$ and $\Theta_u^*$ are determined based on the relationship between throughput, MTBE, RTT and MSS discussed previously:

$$\Theta_s^* = \frac{R1 \cdot (RTT_{ref})^2}{12 \cdot MSS_{ref}}$$

$$\Theta_u^* = \frac{R2 \cdot (RTT_{ref})^2}{12 \cdot MSS_{ref}}$$

where:

- $RTT_{ref}$ is a reference Round-Trip Time value for the group of Digital Subscriber Lines 5, which may be determined for example by pinging a set of representative servers from some of the Digital Subscriber Lines 5 and determining a mean value.
- $MSS_{ref}$ is a reference value for the maximum-segment-size of the TCP segment. For example, it is the predetermined value 1460 bytes.

In an embodiment, the thresholds $\Theta_s^*$ and $\Theta_u^*$ are used as thresholds $\Theta_s$ and $\Theta_u$ in step S2 of Figure 2. In another embodiments, the control device 2 determines the thresholds $\Theta_s$ and $\Theta_u$ in function of thresholds $\Theta_s^*$ and $\Theta_u^*$, which are related to the throughput of the Digital Subscriber Lines 5, and of thresholds $\Theta_s'$ and $\Theta_u'$, which are related to the Quality of Experience of the service provided by the Digital Subscriber Lines 5. The thresholds $\Theta_s'$ and $\Theta_u'$ are for example determined empirically based on common knowledge, tests, experience or operator's desire. The control device 2 may then determine the thresholds $\Theta_s$ and $\Theta_u$ as follows:

$$\Theta_s = \max(\Theta_s^*, \Theta_s')$$

$$\Theta_u = \max(\Theta_u^*, \Theta_u')$$

Accordingly, if the user experience definitions are quite tolerant but errors are affecting the throughput, the service quality is still presented as degraded (unstable). By contrast, if there is no throughput impact but the quality of experience is degraded, again the service quality is classified as degraded (unstable).

In the telecommunication network 1, the control device 2 sets the values of the MTBE thresholds used for assessing the stability of a Digital Subscriber Line in function of the DSL bitrates of a group of lines. Accordingly, a realistic and representative assessment of the stability of the line may be determined. Moreover, the control device 2 may used the determined stability for Dynamic Line Management. Since the MTBE thresholds have been determined in function of DSL bitrates, the impact of DLM on the throughput is improved.

This may be illustrated by the following example:

In function of the obtained DSL bitrates, the control device 2 determines the reference bitrate R1 as the attainable bitrate 90-percentile: R1 =16 Mbits/s. This means 90% of the lines of the group present an attainable bitrate lower than 16 Mbits/s. With the example values $RTT_{ref}$ = 195 ms and $MSS_{ref}$ =1460 Bytes, 90% of the lines will NOT be impacted by a MTBE being above $16*(195^2)/(12*1460)=34s$. Accordingly, $\Theta_s$ can be defined as $\Theta_s$ =34s. Setting $\Theta_s$ above 34s will be sub-optimal as no throughput improvement is expected with larger MTBE.

Similarly, in function of the obtained DSL bitrates, the control device 2 determines the reference bitrate R2 as the attainable bitrate 50-percentile: R2=6 Mbits/s. This means most of the lines of the group present an attainable bitrate higher than 6 Mbits/s. With the example values $RTT_{ref}$ = 195 ms and $MSS_{ref}$ =1460 Bytes, at least 50% of the lines will be impacted by a MTBE around $6*(195^2)/(12*1460)=13s$ or below. Accordingly, $\Theta_u$ can be defined as $\Theta_u$ = 13s.

The two service quality threshold are therefore $[\Theta_u\ \Theta_s]$=[13s 34s]. Having a MTBE above 34s guarantees no impact on TCP/IP throughput while having an MTBE below 13s states about an impact on more than half of the lines. Notice that different percentile can be chosen, like for instance the percentile-10 for $\Theta_u$, which therefore can state about an impact for most of the end-users of MTBE ranges below such $\Theta_u$ value.

**Figure 5** is a structural view of the control device 2, which comprises a processor 6 and a memory 7. The memory 7 stores a computer program P which, when executed by the processor 6, cause the control device 2 to execute method described above with reference to Figures 2 and 4.

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared, for example in a cloud computing architecture. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represents various processes which may be substantially represented in computer readable medium and so executed by a computer or processor, whether or not such computer or processor is explicitly shown.

Embodiments of the method can be performed by means of dedicated hardware and/of software or any combination of both.

While the principles of the invention have been described above in connection with specific embodiments, it is to be clearly understood that this description is made only by way of example and not as a limitation on the scope of the invention, as defined in the appended claims.

**Claims**

1.  Method for determining the stability of a Digital Subscriber Line (5), executed by a control device (2), comprising:

    - obtaining (S1) at least one performance indicator (MTBE) representative of an issue rate on said Digital Subscriber Line (5), and
    - determining (S2) the stability of said Digital Subscriber Line (5) by comparing said performance indicator with at least one threshold ($\Theta_s$, $\Theta_u$),
    - wherein said at least one threshold ($\Theta_s$, $\Theta_u$) is determined by:
    - obtaining (T1) data representative of the actual or attainable bitrates of a group of Digital Subscriber Lines (5), said group including a plurality of Digital Subscriber Lines (5),
    - determining (T2) at least one reference bitrate (R1, R2) in function of said actual or attainable bitrates, and
    - determining (T3, T4) said at least one threshold ($\Theta_s$, $\Theta_u$) in function of said reference bitrate (R1, R2).

2.  Method according to claim 1, wherein said performance indicator is a Mean Time Between Error, determined in function of at least one of an amount of Code Violation, of Errored Seconds and of Severly Errored Seconds.

3.  Method according to one of claims 1 and 2, wherein said at least one reference bitrate comprises a first reference bitrate (R1) representative of a maximum bitrate associated with most of the Digital Subscriber Lines of the group, and a second reference bitrate (R2) representative of a minimum bitrate associated with most of the Digital Subscriber Lines of the group.

4. Method according to claim 3, wherein said first reference (R1) bitrate is the X-percentile of said actual or attainable bitrates, with X ≥ 50%, and/or wherein said second reference bitrate (R2) is the Y-percentile of said actual or attainable bitrates, with Y ≤ 50%.

5. Method according to one of claims 3 and 4, wherein said at least one threshold comprises a first threshold proportional to said first reference bitrate and a second threshold proportional to said second reference bitrate.

6. Method according to one of claims 3 and 4, wherein said at least one threshold ($\Theta_s$, $\Theta_u$) comprises a first threshold ($\Theta_s$) determined as the maximum of a threshold $\left(\Theta_s^*\right)$ proportional to said first reference bitrate and a first predetermined value $\left(\Theta_s'\right)$, and a second threshold ($\Theta_u$) determined as the maximum of a threshold $\left(\Theta_u^*\right)$ proportional to said second reference bitrate and a second predetermined value $\left(\Theta_u'\right)$.

7. Method according to one of claims 1 to 6, wherein determining (S2) the stability of said Digital Subscriber Line comprise determining that the stability has one of a first value representative of a stable or good state, a second value representative of a risky or intermediate state, and a third value representative of an unstable or degraded state.

8. Method according to one of claims 1 to 7, comprising controlling (S3) said Digital Subscriber Line in function of the determined stability.

9. Method according to claim 7 and 8, wherein controlling (S3) said Digital Subscriber Line comprises increasing a noise margin and/or a latency of the Digital Subscriber Line in response to determining that the stability has said third value.

10. Computer program (P) comprising instructions for performing the method of one of claims 1 to 8 when said instructions are executed by a computer.

11. Control device (2) for determining the stability of a Digital Subscriber Line (5), comprising:

- means (6, 7, P) for obtaining at least one performance indicator representative of an issue rate on said Digital Subscriber Line, and
- means (6, 7, P) for determining the stability of said Digital Subscriber Line by comparing said performance indicator with at least one threshold,
- wherein said control device comprises means (6, 7, P) for determining said at least one threshold, comprising:
- means (6, 7, P) for obtaining data representative of the actual or attainable bitrates of a group of Digital Subscriber Lines, said group including a plurality of Digital Subscriber Lines,
- means (6, 7, P) for determining at least one reference bitrate in function of said actual or attainable bitrates, and
- means (6, 7, P) for determining said at least one threshold in function of said reference bitrate.


**Amended claims in accordance with Rule 137(2) EPC.**

1. Method for determining the stability of a Digital Subscriber Line (5), executed by a control device (2), comprising:

- obtaining (S1) at least one performance indicator (MTBE) representative of an issue rate on said Digital Subscriber Line (5), and
- determining (S2) the stability of said Digital Subscriber Line (5) by comparing said performance indicator with at least one threshold ($\Theta_s$, $\Theta_u$),
- **characterized in that** said at least one threshold ($\Theta_s$, $\Theta_u$) is determined by:

- obtaining (T1) data representative of the actual or attainable bitrates of a group of Digital Subscriber Lines (5), said group including a plurality of Digital Subscriber Lines (5),
- determining (T2) at least one reference bitrate (R1, R2) in function of said actual or attainable bitrates, and
- determining (T3, T4) said at least one threshold ($\Theta_s$, $\Theta_u$) in function of at least one threshold $\left(\Theta_s^*, \Theta_u^*\right)$ proportional to said at least one reference bitrate (R1, R2) determined as

$$R * RTT_{ref}^2/(12*MSS_{ref}^2)$$

wherein R said at least one reference bitrate, $RTT_{ref}$ is a reference Round-Trip Time value for the group of Digital Subscriber Lines, and $MSS_{ref}$ is a reference value for the maximum-segment-size of the TCP segment.

2. Method according to claim 1, wherein said performance indicator is a Mean Time Between Error, determined in function of at least one of an amount of Code Violation, of Errored Seconds and of Severly Errored Seconds.

3. Method according to one of claims 1 and 2, wherein said at least one reference bitrate comprises a first reference bitrate (R1) representative of a maximum bitrate associated with most of the Digital Subscriber Lines of the group, and a second reference bitrate (R2) representative of a minimum bitrate associated with most of the Digital Subscriber Lines of the group.

4. Method according to claim 3, wherein said first reference (R1) bitrate is the X-percentile of said actual or attainable bitrates, with X ≥ 50%, and/or wherein said second reference bitrate (R2) is the Y-percentile of said actual or attainable bitrates, with Y ≤ 50%.

5. Method according to one of claims 3 and 4, wherein said at least one threshold comprises a first threshold proportional to said first reference bitrate and a second threshold proportional to said second reference bitrate.

6. Method according to one of claims 3 and 4, wherein said at least one threshold ($\Theta_s$, $\Theta_u$) comprises a first threshold ($\Theta_s$) determined as the maximum of a threshold $\left(\Theta_s^*\right)$ proportional to said first reference bitrate and a first predetermined value ($\Theta'_s$), and a second threshold ($\Theta_u$) determined as the maximum of a threshold $\left(\Theta_u^*\right)$ proportional to said second reference bitrate and a second predetermined value $\left(\Theta'_u\right)$.

7. Method according to one of claims 1 to 6, wherein determining (S2) the stability of said Digital Subscriber Line comprise determining that the stability has one of a first value representative of a stable or good state, a second value representative of a risky or intermediate state, and a third value representative of an unstable or degraded state.

8. Method according to one of claims 1 to 7, comprising controlling (S3) said Digital Subscriber Line in function of the determined stability.

9. Method according to claim 7 and 8, wherein controlling (S3) said Digital Subscriber Line comprises increasing a noise margin and/or a latency of the Digital Subscriber Line in response to determining that the stability has said third value.

10. Computer program (P) comprising instructions for performing the method of one of claims 1 to 8 when said instructions are executed by a computer.

11. Control device (2) for determining the stability of a Digital Subscriber Line (5), comprising:

- means (6, 7, P) for obtaining at least one performance indicator representative of an issue rate on said Digital Subscriber Line, and
- means (6, 7, P) for determining the stability of said Digital Subscriber Line by comparing said performance indicator with at least one threshold,
- **characterized in that** said control device comprises means (6, 7, P) for determining said at least one threshold, comprising:

- means (6, 7, P) for obtaining data representative of the actual or attainable bitrates of a group of Digital Subscriber Lines, said group including a plurality of Digital Subscriber Lines,
- means (6, 7, P) for determining at least one reference bitrate in function of said actual or attainable bitrates, and
- means (6, 7, P) for determining said at least one threshold in function of at least one threshold $\left(\Theta_s^*, \Theta_u^*\right)$

proportional to said at least one reference bitrate (R1, R2) determined as

$$R * RTT_{ref}^{2}/(12*MSS_{ref}^{2})$$

wherein R said at least one reference bitrate, $RTT_{ref}$ is a reference Round-Trip Time value for the group of Digital Subscriber Lines, and $MSS_{ref}$ is a reference value for the maximum-segment-size of the TCP segment.

FIG. 1

FIG. 2

FIG. 4

FIG. 5

FIG. 3

## EP 3 091 724 A1

Europäisches Patentamt
European Patent Office
Office européen des brevets

# EUROPEAN SEARCH REPORT

Application Number

EP 15 30 5682

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 806 594 A1 (ALCATEL LUCENT [FR]) 26 November 2014 (2014-11-26) * abstract; claims 1-14; figures 1-3,6 * * paragraph [0002] - paragraph [0022] * * paragraph [0032] - paragraph [0065] * ----- | 1-11 | INV. H04M11/06 H04M3/30 |
| X | EP 2 797 249 A1 (ALCATEL LUCENT [FR]) 29 October 2014 (2014-10-29) * abstract; claims 1-15; figures 3-6 * * paragraph [0006] - paragraph [0025] * * paragraph [0032] - paragraph [0055] * ----- | 1-11 | |
| A | "Dynamic Line Management for Digital Subscriber Lines", INTERNET CITATION, 8 April 2005 (2005-04-08), XP002442256, Retrieved from the Internet: URL:http://www1.alcatel-lucent.com/com/en/appcontent/apl/18812_DLM_twp_tcm172-228691635.pdf [retrieved on 2007-07-12] * page 1 - page 5 * ----- | 1-11 | |
| A | EP 2 107 734 A1 (BRITISH TELECOMM [GB]) 7 October 2009 (2009-10-07) * abstract; figures 1-3 * * paragraph [0006] - paragraph [0014] * * paragraph [0019] * * paragraph [0039] - paragraph [0046] * ----- | 1-11 | TECHNICAL FIELDS SEARCHED (IPC)  H04M H04L |

The present search report has been drawn up for all claims

| Place of search | Date of completion of the search | Examiner |
|---|---|---|
| Munich | 16 October 2015 | Ohanovici, Z |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

13

## ANNEX TO THE EUROPEAN SEARCH REPORT
## ON EUROPEAN PATENT APPLICATION NO.

EP 15 30 5682

This annex lists the patent family members relating to the patent documents cited in the above-mentioned European search report.
The members are as contained in the European Patent Office EDP file on
The European Patent Office is in no way liable for these particulars which are merely given for the purpose of information.

16-10-2015

| Patent document cited in search report | | Publication date | Patent family member(s) | | Publication date |
|---|---|---|---|---|---|
| EP 2806594 | A1 | 26-11-2014 | EP | 2806594 A1 | 26-11-2014 |
| | | | WO | 2014187609 A1 | 27-11-2014 |
| EP 2797249 | A1 | 29-10-2014 | NONE | | |
| EP 2107734 | A1 | 07-10-2009 | CN | 101981875 A | 23-02-2011 |
| | | | EP | 2107734 A1 | 07-10-2009 |
| | | | EP | 2260617 A1 | 15-12-2010 |
| | | | US | 2011019575 A1 | 27-01-2011 |
| | | | WO | 2009122154 A1 | 08-10-2009 |

EPO FORM P0459

For more details about this annex : see Official Journal of the European Patent Office, No. 12/82